# EUROPEAN PATENT SPECIFICATION

(11) **EP 3 932 896 B1**
(45) Date of publication and mention of the grant of the patent: **15.03.2023**
(21) Application number: 21154143.8
(22) Date of filing: 28.01.2021
(51) Int. Cl.: C05B 7/00, C05C 5/02, C05C 9/00, C05D 3/02, C05D 9/00, C05F 11/00, C05F 11/02

(54) **BIOCHAR-BASED FERTILIZER FOR IMPROVING FORESHORE SALINE-ALKALI SOIL, AND PREPARATION METHOD AND USE THEREOF**
DÜNGEMITTEL BASIEREND AUF BIOKOHLE ZUR VERBESSERUNG VON VORLAND-SALZALKALIBÖDEN UND VERFAHREN ZU DESSEN HERSTELLUNG UND VERWENDUNG
ENGRAIS À BASE DE BIOCHAR POUR L'AMÉLIORATION DES SOLS SALINS-ALCALINS DE L'ESTRAN AINSI QUE SON PROCÉDÉ DE PRÉPARATION ET SON UTILISATION

(30) Priority: 29.06.2020 CN 202010608419
(43) Date of publication of application: 05.01.2022
(73) Proprietor: Zhejiang University of Science & Technology, Hangzhou, Zhejiang 310023 (CN)
(72) Inventor: SHAN, Shengdao, Hangzhou, Zhejiang (CN); GAO, Hongbei, Hangzhou, Zhejiang (CN); ZHENG, Ruonan, Hangzhou, Zhejiang (CN)
(74) Representative: Caldwell, Judith Margaret

(56) References cited:
- DATABASE WPI Week 201846 Thomson Scientific, London, GB; AN 2018-434179 XP002803637, & CN 108 083 908 A (SHANDONG SHENGJING TOURISM DEV CO LTD) 29 May 2018 (2018-05-29)
- DATABASE WPI Week 201970 Thomson Scientific, London, GB; AN 2019-77149J XP002803638, & CN 110 156 537 A (BEIJING ZHONGNONG XUFENG ECOLOGICAL TECH) 23 August 2019 (2019-08-23)
- DATABASE WPI Week 201363 Thomson Scientific, London, GB; AN 2013-N70760 XP002803639, & CN 103 012 016 A (UNIV TSINGHUA) 3 April 2013 (2013-04-03)
- DATABASE WPI Week 201873 Thomson Scientific, London, GB; AN 2018-71781P & CN 108 484 286 A (XINJIANG TAIGU BIO-FERTILIZER CO LTD) 4 September 2018 (2018-09-04)

## Description

### TECHNICAL FIELD

The present invention relates to the technical field of the improvement of coastal saline-alkali soils, and to a biochar-based fertilizer for improving foreshore saline-alkali soils, and a preparation method and use thereof according to claims 1, 8 and 9.

### BACKGROUND

Saline-alkali soil is a general term for saline soil, alkali soil, and various salinized and alkalized soils. Saline soil mainly refers to salinized soil with high content of chloride or sulfate; and alkali soil refers to alkaline soil including carbonate or heavy phosphate, with a high pH. Normally, saline-alkali soil is susceptible to compaction and has low porosity and poor air- and water-permeability, which will seriously affect the metabolic activity of microorganisms and plant roots in the soil and the transformation of nutrients, resulting in impoverished soil with low fertility. In particular, saline-alkali soil includes lots of base cations such as sodium and magnesium ions, which will significantly impact the physiological functions of vegetation and inhibit the growth, development and reproduction of vegetation. With the continuous social and economic development, the continuous increase in food demand and the continuous reduction of available arable area, more and more attention has been paid to the reclamation of coastal saline-alkali soils and the improvement of the utilization of the coastal saline-alkali soils, which has important practical significance for promoting the agricultural development, people's living standards and environmental protection, and is in line with the overall requirements of the national sustainable development strategy.

At present, the improvement methods for saline-alkali soils mainly include physical improvement, chemical improvement and biological improvement. The physical improvement mainly adopts water leaching and salt elimination in conjunction with plowing, silting and other measures to achieve the purpose of improving saline-alkali soils. The physical method usually requires the establishment of a larger irrigation and drainage system, which is costly and not effective in areas lacking fresh water. The chemical improvement is to reduce the degree of salinization and alkalinization in soil by adding some acidic chemicals, adsorptive organic polymer materials and the like, which is efficient, but easy to cause secondary pollution to soil and water. The biological improvement is to improve the physical and chemical properties of soil by planting saline- and alkali-resistant plants and applying microorganism fertilizers, so as to improve the saline-alkali soil. However, the method has low efficiency, and especially for heavy saline-alkali soils, vegetation is often difficult to survive. Therefore, it is of great practical significance to coordinately develop a novel, more applicable, easy and efficient technology to achieve the restoration and improvement of saline-alkali soils.

CN108083908 and CN108484286 describe fertiliser compositions for saline soils comprising biochar. CN110156537 and CN103012016 describe additional fertiliser compositions for saline soils.

### SUMMARY

The present invention is intended to provide a biochar-based fertilizer for improving foreshore saline-alkali soils, and a preparation method and use thereof as described in the claims.

The biochar-based fertilizer of the present invention can exhibit slow release of nutrients, effectively reduce the salt content in soil, improve the structure and fertility of soil, and optimize the growth environment for crop roots.

The present invention provides a biochar-based fertilizer for improving foreshore saline-alkali soils, including the following components, in parts by weight: 40 to 60 parts of biochar, 20 to 40 parts of humic acid substance, 10 to 20 parts of inorganic compound fertilizer, 5 to 15 parts of desulfurization gypsum, 5 to 15 parts of fly ash, and 3 to 5 parts of hydrolyzed polymaleic anhydride (HPMA), wherein the biochar-based fertilizer has a pH of 4 to 7.

Preferably, the biochar is prepared by a method including the following steps:
subjecting crop straws and/or human and animal manure and/or putrescible waste to carbonization for 1 h to 2 h at 300°C to 700°C under an oxygen content < 1%, and then cooling and crushing the mixture to give biochar with a particle size ≤ 2 mm.

Preferably, the crop straws include one or more of corn straws, wheat straws, rice straws and rape straws.

Preferably, the human and animal manure includes one or more of pig manure, chicken manure and human manure.

Preferably, the putrescible waste includes one or more of household kitchen waste, commercial meal waste, and market fresh food waste.

Preferably, the humic acid substance has a humic acid content of 30% to 60%, and includes one or more of potassium humate, ammonium humate and peat.

Preferably, the inorganic compound fertilizer includes the following components, in parts by weight: 25 to 50 parts of urea, 15 to 30 parts of monopotassium phosphate, and 15 to 30 parts of potassium nitrate or potassium chloride.

The present invention further provides a method for preparing the above biochar-based fertilizer, including the following steps:
1) drying and grinding the humic acid substance, desulfurization gypsum and fly ash separately to give a humic acid substance powder, a desulfurization gypsum powder and a fly ash powder;
2) mixing the humic acid substance powder, the desulfurization gypsum powder and the fly ash powder obtained in step 1) with the biochar, and then stirring to give a mixture;
3) dissolving the inorganic compound fertilizer in water to give an inorganic compound fertilizer solution;
4) mixing the inorganic compound fertilizer solution obtained in step 3) with the HPMA to give a mixed solution; and
5) spraying the mixed solution obtained in step 4) on the mixture obtained in step 2), and then stirring and oven-drying to give a biochar-based fertilizer; where steps 1) and 3) can be conducted in any order.

The present invention further provides use of the above biochar-based fertilizer in the improvement of foreshore saline-alkali soils, where, in the use, the biochar-based fertilizer is applied at an amount of 1 ton/m² to 1.5 ton/m² ( 1 tons/mu to 1.5 tons/mu) ; and the biochar-based fertilizer is applied to a position 0 cm to 30 cm below the surface of foreshore saline-alkali soils by broadcast-sowing or rotary-tilling.

The present invention provides a biochar-based fertilizer for improving foreshore saline-alkali soils as described in claim 1. In the biochar-based fertilizer of the present invention, the biochar can significantly adsorb salts in soil to resist the movement of salts, thus reducing the biological toxicity of soil salts; the humic acid substance can quickly increase the content of organic matters in soil and promote the formation of soil aggregates; the inorganic compound fertilizer can quickly improve the content of nitrogen, phosphorus, potassium and other essential nutrient elements for plant growth in soil; the desulfurization gypsum can increase the cation exchange capacity of soil, which is conducive to the rapid leaching of alkali ions such as Na⁺ in soil; the fly ash can improve the soil pore structure and increase the content of trace elements; and the HPMA is used to achieve acid-base equilibrium in soil.

The biochar-based fertilizer of the present invention has characteristics, such as rich and easy-available raw materials, rich nutrients, large specific surface area (SSA), strong ion adsorption capacity, and remarkable improvement effect. The present invention can not only realize the rapid and effective improvement of saline-alkali soils, but also achieve the utilization of waste materials. To solve the problems of high salt content, serious soil compaction and low fertility in foreshore saline-alkali soils, the present invention provides a biochar-based fertilizer, which can significantly improve the soil structure, the nutrient content in soil, the ability of soil to adsorb and exchange base cations, the utilization of soil and water resources, and the yield of crops.

### BRIEF DESCRIPTION OF DRAWINGS

FIG. 1 is a process flow diagram provided by the present invention; and
FIG. 2 shows the improvement effect provided by the present invention.

### DETAILED DESCRIPTION

The present invention provides a biochar-based fertilizer for improving foreshore saline-alkali soils, including the following components, in parts by weight: 40 to 60 parts of biochar, 20 to 40 parts of humic acid substance, 10 to 20 parts of inorganic compound fertilizer, 5 to 15 parts of desulfurization gypsum, 5 to 15 parts of fly ash, and 3 to 5 parts of hydrolyzed polymaleic anhydride (HPMA). In the present invention, the biochar-based fertilizer has a pH of 4 to 7.

In the present invention, the biochar-based fertilizer preferably includes the following components, in parts by weight: 40 parts of biochar, 20 parts of humic acid substance, 10 parts of inorganic compound fertilizer, 5 parts of desulfurization gypsum, 5 parts of fly ash, and 3 parts of HPMA; or 60 parts of biochar, 40 parts of humic acid substance, 20 parts of inorganic compound fertilizer, 15 parts of desulfurization gypsum, 15 parts of fly ash, and 5 parts of HPMA.

In the present invention, the biochar is prepared by a method preferably including the following steps:
subjecting crop straws and/or human and animal manure and/or putrescible waste to carbonization for 1 h to 2 h at 300°C to 700°C under an oxygen content < 1%, and then cooling and crushing the mixture to give biochar with a particle size ≤ 2 mm.

The biochar obtained by the preparation method of the present invention can have a water-retaining capacity reaching 420 g/kg.

The biochar-based fertilizer of the present invention adopts biochar as the core raw material.

The biochar of the present invention is formed by subjecting waste crop straws, human and animal manure and household putrescible waste to pyrolysis and carbonization at a high temperature and a low oxygen concentration, which can realize the recycling of wastes.

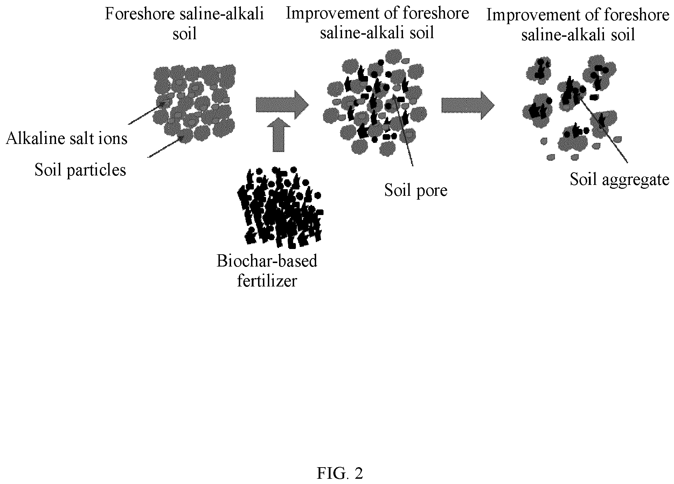

With a carbon content more than 60%, the biochar of the present invention, after entering the soil as a fertilizer, can be slowly decomposed and converted into organic carbon and then gradually absorbed by plants. Moreover, the biochar can effectively adsorb nutrients necessary for the crop growth (as shown in FIG. 2) due to its huge specific surface area (SSA), which can not only prevent the loss of nutrients, but also play a role in the slow release of nutrients.

The present invention, by rationally applying biochar, can significantly optimize the soil structure, effectively improve the physical and chemical properties of soil, and increase the cation exchange capacity and the adsorption capacity of soil. Furthermore, the present invention can also achieve the slow release of fertilizers and the carbon fixation, thereby effectively reducing the leaching loss of nutrients in soil and increasing the utilization efficiency of fertilizers, especially, significantly increasing the content of organic matters in soil. The combination of biochar and fly ash can significantly increase the number of effective pores in soil, alleviate the saline-alkali soil compaction, and realize the utilization of industrial waste.

In the present invention, the carbonization is conducted preferably under anaerobic conditions, namely, having an oxygen content of 0%. In the present invention, the carbonization is conducted preferably for 1.5 h.

In the present invention, the carbonization is conducted preferably at a high temperature of 300°C, 500°C or 700°C; and the biochars obtained by subjecting different biomass raw materials (crop straws, human and animal manure, putrescible waste) to carbonization at the same temperature are mixed in equivalent proportions.

In the present invention, the crop straws preferably include one or more of corn straws, wheat straws, rice straws and rape straws.

In the present invention, the human and animal manure preferably includes one or more of pig manure, chicken manure and human manure.

In the present invention, the putrescible waste includes one or more of household kitchen waste, commercial meal waste, and market fresh food waste.

In the present invention, the putrescible waste preferably includes one or more of putrescible vegetables, meal waste, and fresh food.

The raw materials can be easily obtained, and the present invention can realize the utilization of agricultural and domestic wastes. That is, the present invention achieves the recycling of resources and turns waste into treasure to a certain extent while reducing the risk of environmental pollution.

In the present invention, the humic acid substance has a humic acid content preferably of 30% to 60%, and more preferably of 50%; and the humic acid substance preferably includes one or more of potassium humate, ammonium humate and peat.

In the present invention, the inorganic compound fertilizer preferably includes the following components, in parts by weight: 25 to 50 parts of urea, 15 to 30 parts of monopotassium phosphate, and 15 to 30 parts of potassium nitrate or potassium chloride; and more preferably includes the following components, in parts by weight: 25 to 30 parts of urea, 15 to 20 parts of monopotassium phosphate, and 15 to 20 parts of potassium nitrate or potassium chloride.

In the present invention, the urea, monopotassium phosphate and potassium nitrate (or potassium chloride) are added at a mass ratio preferably of 1:(0.5-1):(0.5-1).

In the present invention, the biochar has a particle size preferably of 0.5 mm to 2 mm.

In the present invention, the HPMA is preferably a commercially-available HPMA solution with a solid content of 50%. The present invention uses HPMA as an acidity regulator, which is easily soluble in water and has characteristics of non-toxicity, harmlessness and high chemical stability. Moreover, the sustained release of HPMA results in a long-lasting adjustment mechanism for the salinization and alkalinization of saline-alkali soils, which will not threaten the health of crops and human.

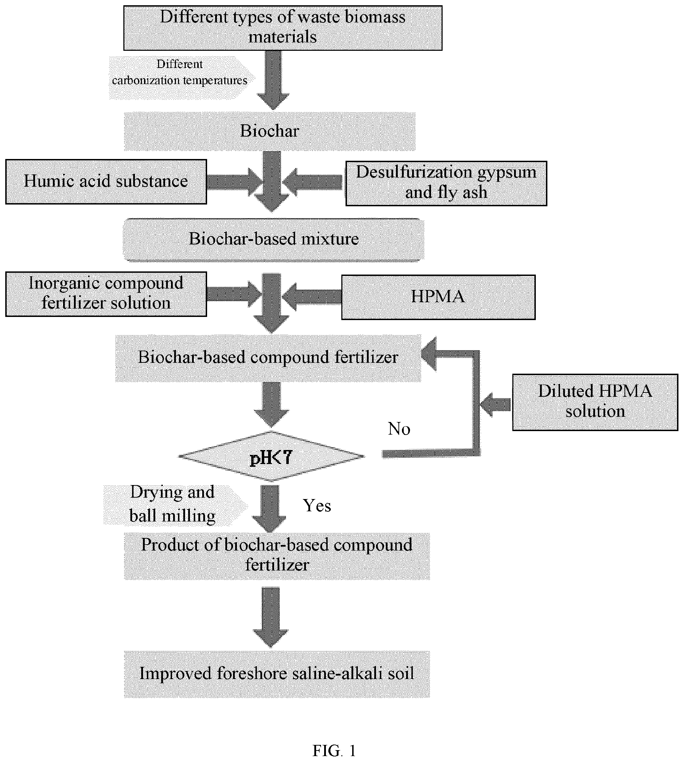

The present invention also provides a method (see FIG. 1 for the flow chart) for preparing the biochar-based fertilizer according to the above solution, including the following steps:
1) drying and grinding the humic acid substance, desulfurization gypsum and fly ash separately to give a humic acid substance powder, a desulfurization gypsum powder and a fly ash powder;
2) mixing the humic acid substance powder, the desulfurization gypsum powder and the fly ash powder obtained in step 1) with the biochar, and then stirring to give a mixture;
3) dissolving the inorganic compound fertilizer in water to give an inorganic compound fertilizer solution;
4) mixing the inorganic compound fertilizer solution obtained in step 3) with the HPMA to give a mixed solution; and
5) spraying the mixed solution obtained in step 4) on the mixture obtained in step 2), and then stirring and oven-drying to give a biochar-based fertilizer; where
   steps 1) and 3) can be conducted in any order.

In the present invention, the humic acid substance, desulfurization gypsum and fly ash are dried and ground separately to give a humic acid substance powder, a desulfurization gypsum powder and a fly ash powder. In the present invention, the humic acid substance powder has a particle size preferably < 50 µm; the desulfurization gypsum powder has a particle size < 50 µm; the fly ash powder has a particle size preferably < 100 µm. The present invention has no specific limitation on the method of the drying, a conventional air-curing and oven-drying method may be employed. The present invention has no specific limitation on the method of the grinding, a crushing and grinding method well known by a person skilled in the art may be employed.

In the present invention, after the humic acid substance powder, desulfurization gypsum powder and fly ash powder are obtained, the humic acid substance powder, desulfurization gypsum powder and fly ash powder are mixed with the biochar under stirring to give a mixture. The present invention has no specific limitation on the method of the stirring, a conventional mixing tank may be used for stirring. In the present invention, the stirring is conducted preferably for 20 min to 30 min, and the stirring is conducted at a rotational speed preferably of 200 rpm to 800 rpm.

In the present invention, the inorganic compound fertilizer is dissolved in water to give an inorganic compound fertilizer solution. In the present invention, the water is preferably deionized water. In the present invention, during the dissolution in water, sufficient stirring is preferably conducted at a speed preferably of 200 rpm to 800 rpm.

In the present invention, after the inorganic compound fertilizer solution is obtained, the inorganic compound fertilizer solution is mixed with the HPMA to give a mixed solution. In the present invention, the HPMA is preferably commercially-available HPMA with a solid content of 50%. In the present invention, after the mixing, sufficient stirring is preferably conducted.

In the present invention, after the mixture and the mixed solution are obtained, the mixed solution is sprayed on the mixture, and the resulting mixture is then stirred and oven-dried to give a biochar-based fertilizer. In the present invention, during the spraying, the mixture is preferably stirred thoroughly at a speed preferably of 300 rpm to 500 rpm. In the present invention, after the sufficient stirring, the pH is preferably adjusted with a diluted HPMA solution, and the pH is preferably adjusted to 4 to 7.

In the present invention, the diluted HPMA solution is prepared preferably as follows: adding a commercially-available HPMA aqueous solution with a solid content of 50% to deionized water at a ratio of 1:1000 to give a diluted HPMA solution.

In the present invention, the oven-drying is preferably conducted in twice. The first oven-drying is conducted preferably at 130°C to 200°C and more preferably at 150°C to 180°C until the moisture content is lower than 15%, and then natural cooling is conducted. After the natural cooling, the present invention preferably uses a ball mill for ball milling to give spherical particles with a particle size of 3 mm to 5 mm.

In the present invention, the ball milling is conducted at a rotational speed preferably of 100 rpm to 180 rpm. After the spherical particles are obtained, the present invention preferably conducts the second oven-drying, and then natural cooling is preferable conducted after the drying. The second oven-drying is conducted preferably at 90°C to 130°C until the moisture content is lower than 8%. The first drying of the present invention can facilitate the ball-milling, and the second drying can prevent dispersion and facilitate the long-term storage.

In the present invention, the obtained biochar-based fertilizer is preferably cooled and dispensed.

The present invention also provides the use of the biochar-based fertilizer according to the above solution in the improvement of foreshore saline-alkali soils. In the use, the biochar-based fertilizer is applied at an amount of 1 ton/m² to 1.5 ton/m² ( 1 tons/mu to 1.5 tons/mu); and the biochar-based fertilizer is applied to a position 0 cm to 30 cm below the surface of foreshore saline-alkali soils by broadcast-sowing or rotary-tilling. The biochar-based fertilizer of the present invention is preferably applied to the soil in the form of basal fertilizer, which are mixed by rotary-tilling.

The biochar-based fertilizer for improving foreshore saline-alkali soils and a preparation method and use thereof disclosed in the present invention will be further described in detail below with reference to specific examples. The technical solutions of the present invention include, but are limited to, the following examples.

### Example 1

A biochar-based fertilizer for improving foreshore saline-alkali soils includes the following components, in parts by weight: 40 parts of biochar, 20 parts of humic acid substance, 10 parts of compound fertilizer, 5 parts of desulfurization gypsum, 5 parts of fly ash, and 3 parts of HPMA.

The biochar was made by subjecting corn straws, pig manure and putrescible waste to pyrolysis and carbonization separately at 300°C and an oxygen content < 0.1%, and then mixing the products.

The humic acid substance was potassium humate with a humic acid content of 60%.

The compound fertilizer was prepared by mixing urea, monopotassium phosphate and potassium nitrate at a ratio of 1:0.5:0.5.

The desulfurization gypsum and fly ash were ground and crushed to have a particle size < 50 µm.

A preparation method of the biochar-based fertilizer for improving foreshore saline-alkali soils included the following steps:
(1) The collected corn straws, pig manure and putrescible waste were air-cured and oven-dried, and then subjected to anaerobic pyrolysis and carbonization at 300°C for 1 h to 1.5 h separately; and the obtained three biochar products were cooled, then crushed to particles with a particle size < 2 mm, and then thoroughly mixed at a ratio of 1:1:1.
(2) The humic acid substance, desulfurization gypsum and fly ash were separately air-cured or oven-dried, and then fully crushed and ground, where, after the grinding, the humic acid substance had a particle size < 50 µm, the desulfurization gypsum had a particle size < 50 µm, and the fly ash had a particle size < 100 µm.
(3) The granular biochar obtained in step (1) and the powdered humic acid substance, desulfurization gypsum and fly ash obtained in step (2) were thoroughly mixed in a mixing tank under stirring, where, the stirring was conducted for 20 min at a stirring rate of 300 rpm.
(4) Urea, monopotassium phosphate and potassium nitrate were thoroughly mixed at a ratio of 1:0.5:0.5 and then completely dissolved in deionized water, where, during the dissolution, sufficient stirring was conducted at a stirring rate of 300 rpm.
(5) HPMA with a solid content of 50% was added to the mixture solution obtained in step (4), and the resulting mixture was fully stirred for complete mixing; and HPMA with a solid content of 50% was added to ionized water at a ratio of 1:1000 to give a diluted HPMA solution as an acidity regulator for use.
(6) The solution obtained in step (5) was uniformly sprayed on the powder mixture obtained in step (4) in the form of a mist, where, during the spraying, the powder mixture was thoroughly stirred at a stirring rate of 300 rpm.
(7) The pH of the resulting mixture was determined, and then adjusted to 4 using the diluted HPMA solution obtained in step (5).
(8) The mixture obtained in step (7) was dried at 150°C until the mixture had a moisture content of 15%, and then naturally cooled.
(9) The dried biochar-based mixture obtained in step (8) was subjected to ball milling in a ball mill at 120 rpm to give spherical particles with a particle size of 3 mm to 5 mm, and the spherical particles were oven-dried again to give the biochar-based fertilizer of the present invention.

### Example 2

A biochar-based fertilizer for improving foreshore saline-alkali soils includes the following components, in parts by weight: 50 parts of biochar, 30 parts of humic acid substance, 15 parts of inorganic compound fertilizer, 10 parts of desulfurization gypsum, 10 parts of fly ash, and 4 parts of HPMA.

The biochar was made by subjecting rice straws, cow manure and putrescible waste to pyrolysis and carbonization separately at 500°C and an oxygen content < 0.1%, and then mixing the products.

The humic acid substance was obtained by mixing potassium humate having a humic acid content of 60% with 30% peat at a ratio of 1:1.

The compound fertilizer was prepared by mixing urea, monopotassium phosphate and potassium nitrate at a ratio of 1:0.7:0.7.

The desulfurization gypsum and fly ash were ground and crushed to have a particle size < 50 µm.

A preparation method of the biochar-based fertilizer for improving foreshore saline-alkali soils included the following steps:
(1) The collected rice straws, cow manure and putrescible waste were air-cured and oven-dried, and then subjected to anaerobic pyrolysis and carbonization at 500°C for 1 h to 1.5 h separately; and the obtained three biochar products were cooled, then crushed to particles with a particle size < 2 mm, and then thoroughly mixed at a ratio of 1:1:1.
(2) The humic acid substance, desulfurization gypsum and fly ash were separately air-cured or oven-dried, and then fully crushed and ground, where, after the grinding, the humic acid substance had a particle size < 50 µm, the desulfurization gypsum had a particle size < 50 µm, and the fly ash had a particle size < 100 µm.
(3) The granular biochar obtained in step (1) and the powdered humic acid substance, desulfurization gypsum and fly ash obtained in step (2) were thoroughly mixed in a mixing tank under stirring, where, the stirring was conducted for 30 min at a stirring rate of 500 rpm.
(4) Urea, monopotassium phosphate and potassium nitrate were thoroughly mixed at a ratio of 1:0.7:0.7 and then completely dissolved in deionized water, where, during the dissolution, sufficient stirring was conducted at a stirring rate of 300 rpm.
(5) 50% HPMA was added to the mixture solution obtained in step (4), and the resulting mixture was fully stirred for complete mixing; and 50% HPMA was added to ionized water at a ratio of 1:1000 to give a diluted HPMA solution as an acidity regulator for use.
(6) The solution obtained in step (5) was uniformly sprayed on the powder mixture obtained in step (4) in the form of a mist, where, during the spraying, the powder mixture was thoroughly stirred at a stirring rate of 500 rpm.
(7) The pH of the resulting mixture was determined, and then adjusted to 5 using the diluted HPMA solution obtained in step (5).
(8) The mixture obtained in step (7) was dried at 150°C until the mixture had a moisture content of 15%, and then naturally cooled.
(9) The dried biochar-based mixture obtained in step (8) was subjected to ball milling in a ball mill at 150 rpm to give spherical particles with a particle size of 3 mm to 5 mm, and the spherical particles were oven-dried again to give the biochar-based fertilizer of the present invention.

### Example 3

A biochar-based fertilizer for improving foreshore saline-alkali soils includes the following components, in parts by weight: 60 parts of biochar, 40 parts of humic acid substance, 20 parts of inorganic compound fertilizer, 15 parts of desulfurization gypsum, 15 parts of fly ash, and 5 parts of HPMA.

The biochar was made by subjecting corn straws, rice straws, pig manure, cow manure and putrescible waste to pyrolysis and carbonization separately at 700°C and an oxygen content < 0.1%, and then mixing the products.

The humic acid substance was peat with a humic acid content of 30%.

The compound fertilizer was prepared by mixing urea, monopotassium phosphate and potassium nitrate at a ratio of 1:0.8:0.8.

The desulfurization gypsum and fly ash were ground and crushed to have a particle size < 50 µm.

A preparation method of the biochar-based fertilizer for improving foreshore saline-alkali soils included the following steps:
(1) The collected corn straws, rice straws, pig manure, cow manure and putrescible waste were air-cured and oven-dried, and then subjected to anaerobic pyrolysis and carbonization at 700°C for 1 h to 1.5 h separately; and the obtained three biochar products were cooled, then crushed to particles with a particle size < 2 mm, and then thoroughly mixed at a ratio of 1:1:1:1:1.
(2) The humic acid substance, desulfurization gypsum and fly ash were separately air-cured or oven-dried, and then fully crushed and ground, where, after the grinding, the humic acid substance had a particle size < 50 µm, the desulfurization gypsum had a particle size < 50 µm, and the fly ash had a particle size < 100 µm.
(3) The granular biochar obtained in step (1) and the powdered humic acid substance, desulfurization gypsum and fly ash obtained in step (2) were thoroughly mixed in a mixing tank under stirring, where, the stirring was conducted for 10min at a stirring rate of 800 rpm.
(4) Urea, monopotassium phosphate and potassium nitrate were thoroughly mixed at a ratio of 1:0.8:0.8 and then completely dissolved in deionized water, where, during the dissolution, sufficient stirring was conducted at a stirring rate of 800 rpm.
(5) 50% HPMA was added to the mixture solution obtained in step (4), and the resulting mixture was fully stirred for complete mixing; and 50% HPMA was added to ionized water at a ratio of 1:1000 to give a diluted HPMA solution as an acidity regulator for use.
(6) The solution obtained in step (5) was uniformly sprayed on the powder mixture obtained in step (4) in the form of a mist, where, during the spraying, the powder mixture was thoroughly stirred at a stirring rate of 800 rpm.
(7) The pH of the resulting mixture was determined, and then adjusted to 6 using the diluted HPMA solution obtained in step (5).
(8) The mixture obtained in step (7) was dried at 150°C until the mixture had a moisture content of 15%, and then naturally cooled.
(9) The dried biochar-based mixture obtained in step (8) was subjected to ball milling in a ball mill at 180 rpm to give spherical particles with a particle size of 3 mm to 5 mm, and the spherical particles were oven-dried again to give the biochar-based fertilizer of the present invention.

Comparative analysis for the properties of examples:
The foreshore saline-alkali soil in Daixi Town, Daishan County, Zhoushan City, Zhejiang Province was adopted as the object of improvement, and four adjacent plots were selected to conduct the comparative test, where, three of the plots were applied with Example 1, Example 2 and Example 3, respectively, and the remaining one was not applied with a biochar-based fertilizer. The soil in the testing area had a high salt content, with an average water-soluble salt content of 34.4 g kg⁻¹ for 0 cm to 25 cm underground soil; an average pH of 8.3; and a volumetric weight of 1.4 g·cm⁻³. Before and after the fertilization, the pH, EC, organic carbon content and porosity in soil at depths ranging from 0 cm to 25 cm were measured for the four plots as basic performance indicators. After the fertilization, the rape crop was planted. The test results are shown in the following table:

**Table 1 Comparative analysis of basic physical and chemical indicators for soil**

| | pH | | EC | | Organic carbon content g kg⁻¹ | | Coefficient of permeability × 10⁻⁵ cm s⁻¹ | |
|---|---|---|---|---|---|---|---|---|
| | Before fertilization | After fertilization | Before fertilization | After fertilization | Before fertilization | After fertilization | Before fertilization | After fertilization |
| Example 1 | 8.7 | 7.8 | 1.47 | 1.03 | 6.8 | 31.3 | 0.23 E | 5.00 E |
| Example 2 | 9.1 | 7.6 | 1.34 | 0.98 | 8.1 | 32.5 | 0.32 E | 5.00 E |
| Example 3 | 9.1 | 7.2 | 1.3 | 0.9 | 7.4 | 32.1 | 0.33 E | 4.50 E |
| Control group | 8.8 | 8.6 | 1.28 | 1.30 | 7.0 | 7.4 | 0.30 E | 0.22 E |

It can be seen from Table 1 that, compared with the control group, Examples 1, 2 and 3 lead to significantly-reduced pH and EC in soil; significantly-increased air-permeability and permeability coefficient of soil; and significantly-improved organic matter content and osmotic absorption in soil, which is in line with the goal for improving foreshore saline-alkali soils.

## Claims

1. A biochar-based fertilizer for improving foreshore saline-alkali soils, comprising the following components, in parts by weight: 40 to 60 parts of biochar, 20 to 40 parts of humic acid substance, 10 to 20 parts of inorganic compound fertilizer, 5 to 15 parts of desulfurization gypsum, 5 to 15 parts of fly ash, and 3 to 5 parts of hydrolyzed polymaleic anhydride (HPMA), wherein the biochar-based fertilizer has a pH of 4 to 7.

2. The biochar-based fertilizer according to claim 1, wherein the biochar is prepared by a method comprising the following steps:
subjecting crop straws and/or human and animal manure and/or putrescible waste to carbonization for 1 h to 2 h at 300°C to 700°C under an oxygen content < 1%, and then cooling and crushing the mixture to give biochar with a particle size ≤ 2 mm.

3. The biochar-based fertilizer according to claim 2, wherein the crop straws comprise one or more of corn straws, wheat straws, rice straws and rape straws.

4. The biochar-based fertilizer according to claim 2, wherein the human and animal manure comprises one or more of pig manure, chicken manure and human manure.

5. The biochar-based fertilizer according to claim 2, wherein the putrescible waste comprises one or more of household kitchen waste, commercial meal waste, and market fresh food waste.

6. The biochar-based fertilizer according to claim 1, wherein, the humic acid substance has a humic acid content of 30% to 60%, and comprises one or more of potassium humate, ammonium humate and peat.

7. The biochar-based fertilizer according to claim 1, wherein the inorganic compound fertilizer comprises the following components, in parts by weight: 25 to 50 parts of urea, 15 to 30 parts of monopotassium phosphate, and 15 to 30 parts of potassium nitrate or potassium chloride.

8. A method for preparing the biochar-based fertilizer according to any one of claims 1 to 7, comprising the following steps:
1) drying and grinding the humic acid substance, desulfurization gypsum and fly ash separately to give a humic acid substance powder, a desulfurization gypsum powder and a fly ash powder;
2) mixing the humic acid substance powder, the desulfurization gypsum powder and the fly ash powder obtained in step 1) with the biochar, and then stirring to give a mixture;
3) dissolving the inorganic compound fertilizer in water to give an inorganic compound fertilizer solution;
4) mixing the inorganic compound fertilizer solution obtained in step 3) with the HPMA to give a mixed solution; and
5) spraying the mixed solution obtained in step 4) on the mixture obtained in step 2), and then stirring and oven-drying to give a biochar-based fertilizer; wherein
steps 1) and 3) can be conducted in any order.

9. Use of the biochar-based fertilizer according to any one of claims 1 to 7 in the improvement of foreshore saline-alkali soils, wherein, in the use, the biochar-based fertilizer is applied at an amount of 1 ton/m² to 1.5 ton/m² ( 1 tons/mu to 1.5 tons/mu) and the biochar-based fertilizer is applied to a position 0 cm to 30 cm below the surface of foreshore saline-alkali soils by broadcast-sowing or rotary-tilling.

## Patentansprüche

1. Auf Biokohle basierendes Düngemittel zum Verbessern von salzalkalischen Küstenböden, umfassend die folgenden Komponenten in Gewichtsteilen: zu 40 bis 60 Teilen Biokohle, zu 20 bis 40 Teilen Huminsäuresubstanz, zu 10 bis 20 Teilen anorganischen Mehrnährstoffdünger, zu 5 bis 15 Teilen Entschwefelungsgips, zu 5 bis 15 Teilen Flugasche und zu 3 bis 5 Teilen hydrolysiertes Polymaleinsäureanhydrid (HPMA), wobei das auf Biokohle basierende Düngemittel einen pH-Wert von 4 bis 7 aufweist.

2. Auf Biokohle basierendes Düngemittel nach Anspruch 1, wobei die Biokohle durch ein Verfahren hergestellt wird, umfassend die folgenden Schritte:
Unterziehen von Getreidestroh und/oder menschlichem und tierischem Dung und/oder verrottbarem Abfall einem Karbonisieren 1 h bis 2 h lang bei 300 °C bis 700 °C bei einem Sauerstoffgehalt von < 1 % und anschließendes Abkühlen und Zerkleinern der Mischung, um Biokohle mit einer Partikelgröße ≤ 2 mm zu erhalten.

3. Auf Biokohle basierendes Düngemittel nach Anspruch 2, wobei das Getreidestroh eines oder mehrere von Maisstroh, Weizenstroh, Reisstroh und Rapsstroh umfasst.

4. Auf Biokohle basierendes Düngemittel nach Anspruch 2, wobei der menschliche und tierische Dung einen oder mehrere von Schweinedung, Hühnerdung und menschlichem Dung umfasst.

5. Auf Biokohle basierendes Düngemittel nach Anspruch 2, wobei der verrottbare Abfall eines oder mehrere von Haushaltsküchenabfällen, kommerziellen Essensabfällen und marktfrischen Lebensmittelabfällen umfasst.

6. Auf Biokohle basierendes Düngemittel nach Anspruch 1, wobei die Huminsäuresubstanz einen Huminsäuregehalt von 30 % bis 60 % aufweist und eines oder mehrere von Kaliumhumat, Ammoniumhumat und Torf umfasst.

7. Auf Biokohle basierendes Düngemittel nach Anspruch 1, wobei der anorganische Mehrnährstoffdünger die folgenden Komponenten in Gewichtsteilen umfasst: zu 25 bis 50 Teilen Harnstoff, zu 15 bis 30 Teilen Monokaliumphosphat und zu 15 bis 30 Teilen Kaliumnitrat oder Kaliumchlorid.

8. Verfahren zum Herstellen des auf Biokohle basierenden Düngemittels nach einem der Ansprüche 1 bis 7, umfassend die folgenden Schritte:
1) getrenntes Trocknen und Mahlen der Huminsäuresubstanz, des Entschwefelungsgipses und der Flugasche, um ein Huminsäuresubstanzpulver, ein Entschwefelungsgipspulver und ein Flugaschepulver zu erhalten;
2) Mischen des Huminsäuresubstanzpulvers, des Entschwefelungsgipspulvers und des Flugaschepulvers, die in Schritt 1) gewonnen werden, mit der Biokohle und anschließendes Rühren, um eine Mischung zu erhalten;
3) Auflösen des anorganischen Mehrnährstoffdüngers in Wasser, um eine anorganische Mehrnährstoffdüngerlösung zu erhalten;
4) Mischen der in Schritt 3) gewonnenen anorganischen Mehrnährstoffdüngerlösung mit dem HPMA, um eine Mischlösung zu erhalten; und
5) Sprühen der in Schritt 4) gewonnenen Mischlösung auf die in Schritt 2) gewonnene Mischung, und anschließendes Rühren und Ofentrocknen, um ein auf Biokohle basierendes Düngemittel zu erhalten; wobei
Schritte 1) und 3) in beliebiger Reihenfolge durchgeführt werden können.

9. Verwendung des auf Biokohle basierenden Düngemittels nach einem der Ansprüche 1 bis 7 in der Verbesserung von salzalkalischen Küstenböden, wobei, bei der Verwendung, das auf Biokohle basierende Düngemittel in einer Menge von 1 Tonne/m² bis 1,5 Tonnen/m² (1 Tonne/mu bis 1,5 Tonnen/mu) ausgebracht wird und das auf Biokohle basierende Düngemittel auf einer Position von 0 cm bis 30 cm unterhalb der Oberfläche von salzalkalischen Küstenböden durch Breitsäen oder rotierendes Bearbeiten ausgebracht wird.

## Revendications

1. Engrais à base de biocharbon pour l'amélioration des sols salins à alcalis d'estran, comprenant les composants suivants, en parties en poids : 40 à 60 parties de biocharbon, 20 à 40 parties de substance acide humique, 10 à 20 parties d'engrais composé inorganique, 5 à 15 parties de gypse de désulfuration, 5 à 15 parties de cendres volantes, et 3 à 5 parties d'anhydride polymaléique hydrolysé (HPMA), l'engrais à base de biocharbon ayant un pH de 4 à 7.

2. Engrais à base de biocharbon selon la revendication 1, le biocharbon étant préparé par un procédé comprenant les étapes suivantes :
la soumission des pailles de culture et/ou du fumier humain et animal et/ou des déchets putrescibles à une carbonisation pendant 1 h à 2 h à une température de 300 °C à 700 °C sous une teneur en oxygène < 1 %, puis le refroidissement et le broyage du mélange pour obtenir du biocharbon avec une taille de particule ≤ 2 mm.

3. Engrais à base de biocharbon selon la revendication 2, les pailles de culture comprenant une ou plusieurs parmi des pailles de maïs, des pailles de blé, des pailles de riz et des pailles de colza.

4. Engrais à base de biocharbon selon la revendication 2, le fumier humain et animal comprenant un ou plusieurs parmi du fumier de porc, du fumier de poulet et du fumier humain.

5. Engrais à base de biocharbon selon la revendication 2, les déchets putrescibles comprenant un ou plusieurs parmi des déchets ménagers de cuisine, des déchets de repas commerciaux, et des déchets d'aliments frais du marché.

6. Engrais à base de biocharbon selon la revendication 1, la substance d'acide humique ayant une teneur en acide humique de 30 % à 60 %, et comprenant un ou plusieurs parmi l'humate de potassium, l'humate d'ammonium et la tourbe.

7. Engrais à base de biocharbon selon la revendication 1, l'engrais composé inorganique comprenant les composants suivants, en parties en poids : 25 à 50 parties d'urée, 15 à 30 parties de phosphate monopotassique, et 15 à 30 parties de nitrate de potassium ou de chlorure de potassium.

8. Procédé de préparation de l'engrais à base de biocharbon selon l'une quelconque des revendications 1 à 7, comprenant les étapes suivantes :
1) le séchage et le broyage de la substance acide humique, du gypse de désulfuration et des cendres volantes séparément pour obtenir une poudre de substance acide humique, une poudre de gypse de désulfuration et une poudre de cendres volantes ;
2) le mélange de la poudre de substance acide humique, la poudre de gypse de désulfuration et la poudre de cendres volantes obtenues à l'étape 1) avec le biocharbon, puis l'agitation pour obtenir un mélange ;
3) la dissolution de l'engrais composé inorganique dans l'eau pour obtenir une solution d'engrais composé inorganique ;
4) le mélange de la solution d'engrais composé inorganique obtenue à l'étape 3) avec l'HPMA pour obtenir une solution mélangée ; et
5) la pulvérisation de la solution mélangée obtenue à l'étape 4) sur le mélange obtenu à l'étape 2), puis l'agitation et le séchage à l'étuve pour obtenir un engrais à base de biocharbon ;
les étapes 1) et 3) pouvant être réalisées dans n'importe quel ordre.

9. Utilisation de l'engrais à base de biocharbon selon l'une quelconque des revendications 1 à 7 dans l'amélioration des sols salins à alcalis d'estran, l'engrais à base de biocharbon étant appliqué, dans l'utilisation, à une quantité de 1 tonne/m² à 1,5 tonne/m² (1 tonne/mu à 1,5 tonne/mu) et l'engrais à base de biocharbon étant appliqué à une position de 0 cm à 30 cm en dessous de la surface des sols salins à alcalis d'estran par un semis à la volée ou un labourage rotatif.
